# EUROPEAN PATENT APPLICATION

(11) **EP 2 725 704 A2**
(43) Date of publication of application: **30.04.2014**
(21) Application number: 13185882.1
(22) Date of filing: 25.09.2013
(51) Int. Cl.: H02P 7/295

(54) **System and method for controlling an electric motor**

(30) Priority: 29.10.2012 BR 102012027771
(71) Applicant: Delphi Technologies, Inc., Troy MI 48007 (US)
(72) Inventor: Rodrigo, Franco, 03542-000 Sao Paulo (BR)
(74) Representative: Neill, Andrew Peter

(57) **Abstract**

A system (100) for controlling an electric motor (112), based on an N-MOS switching device (116), allowing operation in reverse battery polarity condition and protecting the switching device (116) against voltage peaks when in direct battery polarity condition. The system (100) includes a power source (114), a switching device (116) connected in series with the motor (112) to switch the same between the "on" and "off" states, a control device (118) to control the switching device (116), and a thyristor (124) connected in parallel with the motor (112), whereby the conducting and nonconducting states of the thyristor (124) are controlled by the control device (118). Also a method (200) is provided for controlling an electric motor (112), such as in a system (100) defined above, comprising the steps of switching a state of the thyristor (124) in direct battery polarity conditions such that the thyristor (124) conducts current (210) and switching the state of the thyristor (124) in reverse battery polarity conditions such that the thyristor (124) does not conduct (212).

## Description

### TECHNICAL FIELD OF THE INVENTION

The present invention is related to electro-electronic circuits comprising solid-state relays (SSRs). More specifically, the present invention is related to electro-electronic circuits comprising SSRs for controlling direct current motors.

### BACKGROUND OF THE INVENTION

Electro-mechanical relays are widely known in the art, and are widely used in various types of power control and electrical applications. These mechanical devices, that usually comprise a coil and contacts, are quite reliable in spite of entailing problems associated with the presence of moving parts. Additionally, mechanical relays are subject to electrical sparking and arcing.

Moreover, the mechanical relays create abrupt transitions between the "on" and "off" states, generating high current peaks in the circuit at each transition. Such current peaks may, for example, cause the melting of contacts of the circuit, resulting in malfunction of the electrical system.

Nowadays, solid-state relays (SSRs) are being used as replacements for electro-mechanical relays in various applications, including automotive electro-electronic applications for the control of direct current electric motors. There may be noted innumerous advantages of the SSRs over the mechanical devices, including better overcurrent control, reduced size and weight, better power dissipation, higher operating frequency, among others.

However, in the above-cited applications, the SSRs, when compared with the electro-mechanical relays, evidence a disadvantage that consists in the need of an external reverse battery polarity protection circuit, that is, when the poles of the power source are reversed.

The solutions that are most commonly used for protection against polarity inversion are the following:
(i) Using a diode in series with the power line. However, considering the power dissipation, this technique may only be applied for low electrical current systems;
(ii) Using a diode in series with an electro-mechanical relay capable of switching the power line on and off. However, the use of such switching device entails all the problems inherent to electro-mechanical relays as mentioned above herein; or
(iii) Using a P-channel MOSFET to switch the power line. However, that solution entails power dissipation problems due to the high junction resistances of the P-channel devices. Furthermore, such devices are limited to the use in relatively low current circuits.

There may be further adopted an N-channel MOSFET (N-MOS) device for switching the motor. However, such device does not have any protection against reverse voltage peaks when operating with direct battery polarity (for example, when the motor is turned off). Thus, the power is dissipated by the N-MOS device, causing overheating thereof.

A diode connected in parallel with the motor will solve the abovementioned problem, since the reverse voltage peaks are dissipated without damage to the N-MOS device. However, in reverse battery polarity conditions, the diode would allow the current to flow directly to the N-MOS device without passing by the motor, thereby damaging the N-MOS device.

Therefore, there is a need of an element that may obviate the abovementioned disadvantages.

The subject matter discussed in the background section should not be assumed to be prior art merely as a result of its mention in the background section. Similarly, a problem mentioned in the background section or associated with the subject matter of the background section should not be assumed to have been previously recognized in the prior art. The subject matter in the background section merely represents different approaches, which in and of themselves may also be inventions.

### BRIEF SUMMARY OF THE INVENTION

A first object of the present invention consists in the provision of a method and a system for the control of an electric motor, based on an N-MOS switching device, to allow the same to operate in reverse battery polarity conditions.

A second object of the present invention consists in the provision of a method and a system for the control of an electric motor, based on N-MOS switching devices for protection of the latter against reverse voltage peaks generated by the switching of electrical motor(s) in systems using PWM, avoiding the dissipation of power at the N-MOS device and thereby avoiding the overheating thereof.

In order to achieve the above described objects, the present invention provides a system for controlling an electric motor, comprising a power source, a switching device connected in series with the motor to switch the same between the "on" and "off" states, a control device to control the switching device, and a thyristor connected in parallel with the motor, wherein its gate terminal, and consequently its current conducting or non-conducting state, are controlled by the control device.

Additionally, the present invention provides a method of controlling an electric motor in a system as defined above, wherein the method comprises the steps of switching the state of the thyristor in direct battery polarity conditions such that the thyristor conducts current and switching the state of the thyristor in reverse battery polarity conditions such that the thyristor will not conduct current.

Further features and advantages of the invention will appear more clearly on a reading of the following detailed description of the preferred embodiment of the invention, which is given by way of non-limiting example only and with reference to the accompanying drawings.

### BRIEF DESCRIPTION OF THE SEVERAL VIEWS OF THE DRAWING

The present invention will now be described, by way of example with reference to the accompanying drawings, in which:
Fig. 1 is a schematic diagram of an electrical circuit of a system for controlling an electric motor in accordance with one embodiment; and
Fig. 2 is a flow chart of a method of controlling an electric motor system in accordance with one embodiment.

### DETAILED DESCRIPTION OF THE INVENTION

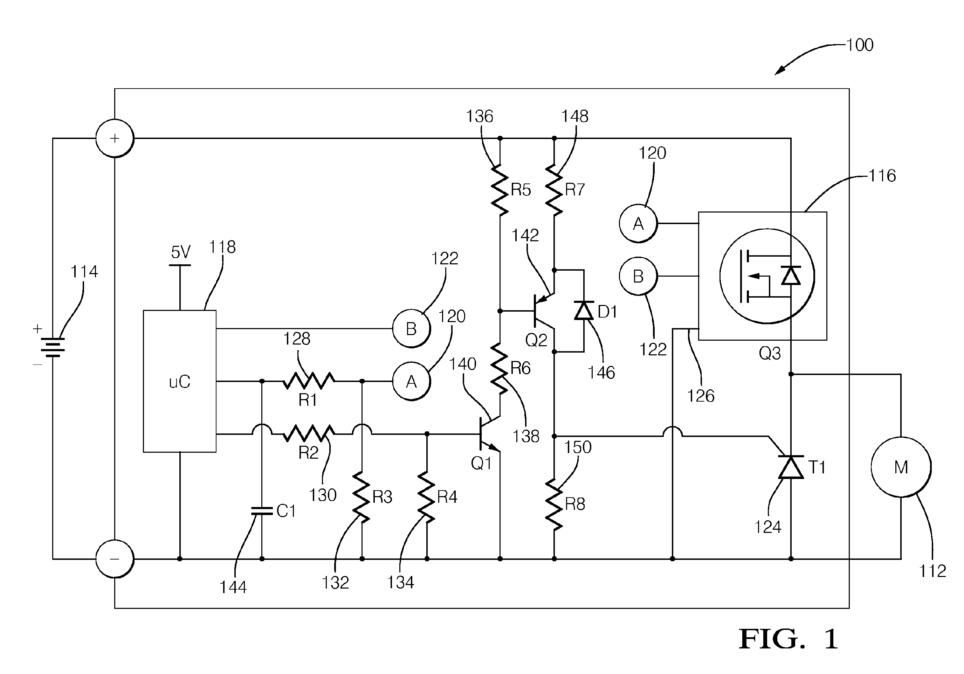

Fig. 1 shows a non-limiting example of an electro-electronic circuit of a system 100 for the control of an electric direct current (DC) motor 112 in a vehicle, which preferably utilizes Pulse Width Modulation (PWM) control. The circuit basically comprises a power source 114, such as a battery, an N-MOS-based switching device (e.g. a solid-state relay) 16 in series with the motor 112, and a control device 118, such as a microcontroller with power supplied thereto independently from the power source 114. Preferably, the control device 118 connects to the N-MOS switching device 116 by means of the terminals 120 and 122. Thus, the control device 118 sends control signals to the N-MOS switching device 116 such that the N-MOS switching device 116 switches the state of the motor 112 between "on" and "off" either in direct battery polarity conditions or in reverse battery polarity conditions.

In order to circumvent the shortcomings of the prior art as cited above herein, the present invention additionally provides a thyristor 124 connected in parallel with the motor 112. Thyristors, particularly those of the silicon controlled rectifier (SCR) type, are semiconductor devices whose direct sense condition is controllable by the application of a current pulse to a gate terminal 126. The conduction, once initiated in the direct sense, is maintained even in the absence of the signal at the gate terminal 126, until that the current flowing therethrough falls below a certain threshold, which is designated as holding current. In the reverse direction, the thyristor 124 behaves as a normal diode, that is, it does not conduct current.

The thyristor 124 implemented herein has its gate terminal 126 controlled by the control device 118. During normal operation of the system 100 with direct battery polarity, the thyristor 124 operates as a diode, avoiding that reverse voltage peaks, inherent to the switching of the motor 112 using PWM, which may cause overheating of the N-MOS switching device 116 through dissipation of power therein. To that end, the control device 118 keeps the thyristor 124 always on, that is, with power applied to its gate terminal 126. Thus, in the presence of reverse voltage peaks, the thyristor 124 creates a short circuit at the terminals of the motor 112, operating as a diode.

When the circuit operates with reverse battery polarity, the thyristor 124 is kept always off by the control device 118. In other words, the control device 118 ceases to apply the pulses at the gate terminal 126 of the thyristor 124, causing the current to always flow through the motor 112, thereby avoiding damage to the N-MOS switching device 116.

In the particular embodiment shown in Fig. 1, the power source 114 has a nominal voltage value of 14.5 volts, while the control device 118 is supplied with a voltage of 5 volts. A series of elements, for example resistors 128-138, transistors 140 and 142, capacitor 144, and diode 146, may be employed to polarize the voltage of the pulse emitted by the control device 118 to the gate terminal 126 of the thyristor 124, since that, in this specific case, the latter operates with a voltage of 14.5 volts. Alternatively, the control device 118 may have the same operating voltage as the thyristor 124, in which case the above-cited elements will be unnecessary.

Further, in order to regulate the voltage that will be applied at the gate terminal 126 of the thyristor 124, a first resistor 148 and a second resistor 150 may be connected in the circuit in order to reduce the voltage provided by the power source 114. Thus, together with the voltage of the pulse generated by the control device 118, the necessary difference in voltage between the "on" state (conducting current) and the "off" state (not conducting current) of the thyristor 124 is ensured, in either the direct battery polarity condition or in the reverse battery polarity condition. The first and second resistors 148, 150 are positioned preferably between one of the poles of the power source 114 and a point of contact with the gate terminal 126. Further preferably, the point of contact between the control device 118 and the gate terminal 126 of the thyristor 124 occurs between the first resistor 148 and the second resistor 150.

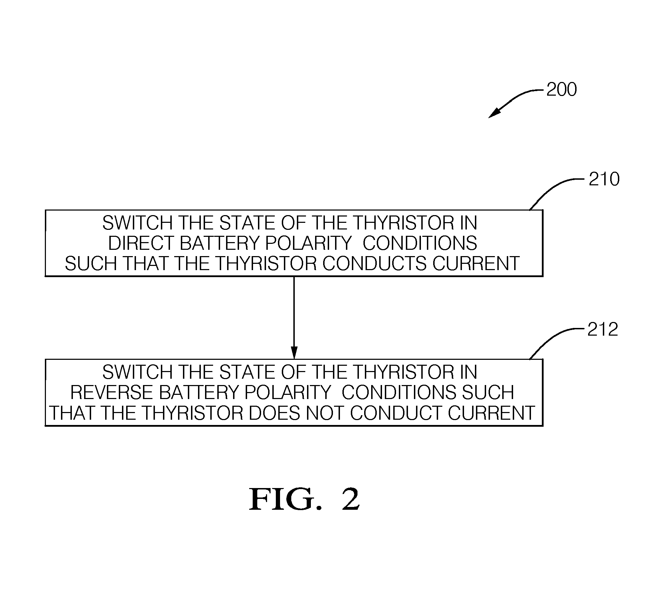

Fig. 2 illustrates a non-limiting example of a method 200 of controlling an electric motor system including a power source 114, a switching device 116 connected in series with the electric motor 112, a control device 118 to control the switching device 116, and a thyristor 124 connected in parallel with the electric motor 112, such as the system 100.

In step 210, SWITCH THE STATE OF THE THYRISTOR IN DIRECT BATTERY POLARITY CONDITIONS SUCH THAT THE THYRISTOR CONDUCTS CURRENT, when in direct battery polarity conditions, a current pulse is applied to a gate terminal 126 of the thyristor 124 causing the thyristor 124 to conduct.

In step 212, SWITCH THE STATE OF THE THYRISTOR IN REVERSE BATTERY POLARITY CONDITIONS SUCH THAT THE THYRISTOR DOES NOT CONDUCT CURRENT, when in reverse battery polarity conditions, the thyristor 124 behaves as a diode and does not conduct current.

Therefore, the present invention provides a system 100 and a method 200 in which the N-MOS switching device 116 is protected under reverse battery polarity conditions and against voltage peaks when in direct battery polarity conditions.

While this invention has been described in terms of the preferred embodiments thereof, it is not intended to be so limited, but rather only to the extent set forth in the claims that follow. Moreover, the use of the terms first, second, etc. does not denote any order of importance, but rather the terms first, second, etc. are used to distinguish one element from another. Furthermore, the use of the terms a, an, etc. do not denote a limitation of quantity, but rather denote the presence of at least one of the referenced items.

## Claims

1. A system (100) for controlling an electric motor (112), comprising:
a power source (114);
a switching device (116) connected in series with the electric motor (112) to switch the same between the "on" and "off" states;
a control device (118) configured to control the switching device (116); and
a thyristor (124) connected in parallel with the electric motor (112), wherein a gate terminal (126) of the thyristor (124) is controlled by the control device (118), thereby controlling a current conducting or non-conducting state of the thyristor (124).

2. The system (100) according to claim 1, wherein the switching device (116) is controlled by the control device (118) using pulse width modulation.

3. The system (100) according to claim 1, wherein the switching device (116) comprises an N-channel metal oxide semiconductor field effect transistor switching device (116).

4. The system (100) according to claim 1, wherein the control device (118) comprises a microcontroller.

5. The system (100) according to claim 1, additionally comprising a first resistor (148) and a second resistor (150) connected in series, each of these being connected between one of the poles of the power source (114) and a point of contact with the gate terminal (126) of the thyristor (124).

6. The system (100) according to claim 5, wherein the point of contact between the control device (118) and the gate terminal (126) of the thyristor (124) is connected between the first resistor (148) and the second resistor (150).

7. A method (200) of controlling an electric motor (112) system (100) including a power source (114), a switching device (116) connected in series with the electric motor (112) to switch the same between the "on" and "off" states, a control device (118) to control the switching device (116) and a thyristor (124) connected in parallel with the electric motor (112), wherein its gate terminal (126) is controlled by the control device (118), comprising the steps of:
switching a state of the thyristor (124) in direct battery polarity conditions such that the thyristor (124) conducts current (210); and
switching the state of the thyristor (124) in reverse battery polarity conditions such that the thyristor (124) does not conduct current (212).
